Europäisches Patentamt

European Patent Office

Office européen des brevets

(19)

(11) **EP 1 005 244 A1**

(12) **EUROPEAN PATENT APPLICATION**

(43) Date of publication:
**31.05.2000 Bulletin 2000/22**

(51) Int. Cl.[7]: **H04Q 7/38**

(21) Application number: **98309658.7**

(22) Date of filing: **25.11.1998**

(84) Designated Contracting States:
**AT BE CH CY DE DK ES FI FR GB GR IE IT LI LU
MC NL PT SE**
Designated Extension States:
**AL LT LV MK RO SI**

(72) Inventor: **Semple, James
London, W11 2AH (GB)**

(74) Representative:
**Read, Matthew Charles et al
Venner Shipley & Co.
20 Little Britain
London EC1A 7DH (GB)**

(71) Applicant: **ICO Services Ltd.
London W6 9BN (GB)**

(54) **Connection authentication in a mobile network**

(57)     A GSM based mobile communications system is vulnerable to attacks in which unauthorised entity appears to a user terminal to be an authorised base station or authorised network, so enabling such an entity to interfere with the setting up of encrypted communications. These types of attack are known as false base station and false network attacks. To avoid these, information is incorporated in the authentication challenge (RAND) sent by an authorised authentication centre (AuC) to inform the user terminal (UT 1) of the encryption algorithms which are supported by the serving network (FRAND, FSRAND) and to enable the user terminal to verify the origin of the authentication challenge (IRAND, SRAND).

**EP 1 005 244 A1**

**Description**

This invention relates to connection authentication in a mobile telecommunications system, particularly but not exclusively to a method of authenticating a connection between a user terminal and a network offering a communications service to the terminal, so as to avoid security breaches such as a false base station attack or a false network attack.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites. In the ICO™ system and others, a visitor location register is associated with each of the satellite ground stations. This maintains a record of the individual user terminals that are making use of the particular ground station. The visitor location registers communicate with a home location register for the satellite network. User terminals are authenticated for use with the satellite network in a similar way to a conventional land based network. For example, the ICO™ system uses an authentication procedure corresponding to GSM authentication used for conventional land based GSM networks.

GSM authentication aims to protect the network against unauthorised access and to protect users' privacy. Considering the GSM system in more detail, and in particular its authentication procedures, individual cells of the mobile network are served by a series of geographically spaced, terrestrial base station subsystems (BSS). Each BSS comprises a number of transceiver stations (BTSs) which are coupled through base station controllers (BSCs) to a mobile switching centre (MSC), which may provide a gateway out of the network to a conventional public switched telephone network (PSTN). The network includes a home location register (HLR) which stores information about the subscribers to the system and their user terminals. When a user terminal is switched on, it registers with the HLR and an authentication procedure is carried out.

Each user terminal is provided with a smart card known as a subscriber identification module (SIM) which stores two unique items to identify the subscriber. The first item comprises an international mobile subscriber identity (IMSI) and the second item comprises a secret parameter referred to in the GSM specifications as Ki. Associated with the HLR is an authentication centre (AuC) which includes data corresponding to the IMSI and Ki for each subscriber to the network.

When the user terminal is switched on, and at other times, the IMSI is transmitted from the user terminal to the HLR, which then refers to the AuC to authenticate the user. To enhance security, an agreed identity alias, known as TMSI (Temporary Mobile Subscriber Identity) is transmitted instead of the IMSI wherever possible, for example where the TMSI has been agreed between the network and an identified subscriber in a previously encrypted message. The IMSI is checked in the memory of the AuC, and a corresponding value of Ki is retrieved. A 128 bit random number RAND is also generated in the AuC. The random number RAND and the value of Ki are applied as inputs to an algorithm referred to in the GSM Specifications as A3, to generate a 32 bit signed result SRES. A3 is an operator-dependent one-way function, so that the generation of SRES is computationally easy, while the calculation of Ki knowing RAND and SRES is computationally difficult, if not impossible. The AuC also includes an algorithm referred to in the GSM Specifications as A8, also an operator-dependent function, which generates a secret key Kc, agreed between the user terminal and the network, that is used in the process of encryption/decryption of data transmitted over the air between the user terminal and the network. In practice, the majority of GSM operators implement the A3 and A8 algorithms as a single algorithm referred to as A3/A8, which produces a 128 bit output of which 32 bits constitute SRES and 64 bits constitute Kc, with the remaining 32 bits being currently unused.

GSM supports up to seven data encryption algorithms, of which A5/1 and A5/2 have been specified to date. Each of these algorithms uses as its inputs the secret key Kc and the frame number of data transmitted through the network.

A triplet of signals comprising RAND, SRES and Kc is fed from the AuC, through the HLR to the MSC, which acts as a checking station in the authentication procedure.

The individual value of RAND is then transmitted on to the user terminal through the network from the MSC. The SIM of the user terminal has the algorithm A3/A8 stored locally, so that it can perform the same calculation as is carried out at the AuC to generate a corresponding value of SRES, referred to herein as SRES', and Kc at the user terminal, using the received value of RAND and the value of Ki stored in the SIM.

SRES' is transmitted back through the network to the MSC and compared with SRES. If they are the same, the user terminal is authenticated, otherwise registration of the user terminal with the HLR is barred.

If the user terminal is authenticated, the MSC then negotiates with the user terminal to determine an encryption algorithm common to both. This involves the MSC comparing encryption algorithms supported by the network with those supported by the user terminal to ensure that both the user terminal and the network have access to the same algorithm for the purpose of data encryption/decryption.

For example, having confirmed that both it and the user terminal can use the algorithm A5/1, the MSC initiates encryption/decryption of data transmitted over the network using the A5/1 algorithm. The SIM of the user terminal generates its own value of the secret key Kc using its locally stored copy of the algorithm A8. The local value of Kc at the user terminal can then be used to encrypt data transmitted by it and decrypt data received from the BTS, also using the locally held copy of the A5/1 algorithm.

The authentication procedure used in GSM has the advantage that only random numbers are transmitted over the air interface between the user terminal and the BTS, which minimises the risk of fraudulent registration.

For further details of the authentication procedure and subsequent data encryption/decryption, reference is directed to "The GSM System for Mobile Communications" M. Mouly & M-B. Pautet, Cell & Sys. 1992 pp. 477 - 492.

If the user terminal roams to a different GSM network, in a different geographical location, it registers with a visitor location register (VLR) of the visited network, which communicates with the HLR of the home network for authentication, billing and other purposes.

The conventional GSM authentication procedure described above is vulnerable to certain types of unauthorised access attack, for example an attack which interferes with the negotiation of a common encryption algorithm to force a message to be transmitted unencrypted, and so facilitate eavesdropping. This type of unauthorised access includes attacks generally referred to as false base-station attacks and false network attacks.

In a false base station attack, a rogue base station is configured so that it appears to a user terminal to be a genuine base station. It operates by intercepting transmissions from the user terminal and relaying them to a genuine base station in the network which is offering a communications service to the user terminal, referred to herein as the serving network. In doing so, the rogue base station does not affect the authentication procedure itself. However, as described above, once the user terminal has been authenticated, the genuine base station attempts to carry out encryption algorithm negotiation. At this stage, the rogue base station informs the user terminal that there are no encryption algorithms available for the call. The user terminal or genuine serving network can then only initiate unencrypted communications.

In a false network attack, an unauthorised network takes advantage of the fact that, after being switched on, a user terminal expects to receive an authentication challenge in the form of the random number RAND. The unauthorised network therefore provides service to the user terminal using an arbitrary RAND which was not generated at the user's AuC. The user terminal generates SRES' in response to the RAND and sends this to the unauthorised network, expecting it to be authorised against SRES generated by the serving network. Instead, the value of SRES' is simply ignored by the unauthorised network, which authenticates the user terminal and pretends to initiate encryption algorithm negotiation. However, as with the false base station attack, the unauthorised network simply informs the user terminal that no encryption algorithms are available, so forcing the call to take place unencrypted.

The conventional solution to the above two problems is for the user terminal to indicate to its user, for example by a warning light or displayed message, that the call is taking place without encryption. This does not overcome the attack, but merely warns the user that the attack may be taking place.

The present invention provides a method of authenticating a connection between a user terminal and a network offering a communications service to the user terminal in a mobile telecommunications system, in which an authorised authentication station issues an authentication challenge to the user terminal, comprising the step of including in the authentication challenge verification information concerning the encryption algorithms which are supported by the network.

By providing verification information concerning the encryption algorithms supported by the network to the user terminal at the authentication stage, the user terminal can subsequently check at the encryption algorithm negotiation stage that the information with which it is being provided is correct.

Security can be further enhanced by including in the authentication challenge information to indicate to the user terminal that the challenge originates from an authorised authentication station.

The present invention further provides a method of authenticating a connection between a user terminal and a network offering a communications service to the user terminal in a mobile telecommunications system, in which an authorised authentication station issues an authentication challenge to the user terminal, comprising the step of including verification information in the authentication challenge to indicate to the user terminal that the challenge originates from the authorised station.

According to the present invention, there is further provided a user terminal for use in a mobile telecommunications system to establish a connection with a network, comprising a receiver to receive an authentication challenge, and means for verifying from information in the challenge, that the challenge originates from an authorised authentication centre.

According to the present invention, there is also provided a user terminal for use in a mobile telecommunications system to establish a connection with a network, comprising a receiver to receive an authentication challenge which includes information defining the encryption algorithms supported by the network, and means for authenticating the connection in dependence on a comparison between said information and information relating to the encryption algorithms supported by the user terminal.

Further, the present invention provides an authentication station for authenticating a connection between a user terminal and a network offering a communications service to the user terminal in a mobile telecommunications system, in which the authentication station issues an authentication challenge to the user terminal, comprising means configured to include in the authentication challenge verification information concerning the encryption algorithms which are supported by the network.

The present invention also provides an authentication station for authenticating a connection between a user terminal and a network offering a communications service to the user terminal in a mobile telecommunications system, in which the authentication station issues an authentication challenge to the user terminal, comprising means configured to include verification information in the authentication challenge to indicate to the user terminal that the challenge originates from the authorised station.

There is also provided, according to the present invention, a method of authenticating a user terminal to avoid a false base station or false network attack, comprising receiving an authentication challenge containing verification information concerning the encryption algorithms supported by a network offering a communications service to the user terminal, performing an encryption algorithm negotiation procedure, and verifying the result of the negotiation procedure based on the verification information.

There is additionally provided according to the present invention a method of authenticating a user terminal to avoid a false base station or false network attack, comprising receiving an authentication challenge containing verification information concerning the origin of the challenge, and determining at the user terminal whether the challenge origin is an authorised authentication centre.

In addition, according to the present invention, there is provided an authentication challenge signal for use in authenticating a connection between a user terminal and a network offering a communications service to the user terminal in a mobile telecommunications system, the signal comprising verification information for use by the user terminal to verify the encryption algorithms which are supported by the network.

There is also provided in accordance with the invention an authentication challenge signal for use in authenticating a connection between a user terminal and a network offering a communications service to the user terminal in a mobile telecommunications system, the signal comprising verification information for use by the user terminal to verify the authenticity of the station at which the signal originates.

Although the inclusion of verification information for the encryption algorithms or for verifying the authenticity of the authentication station enhances security to some extent, a degree of security risk remains if the verification information is transmitted in the clear, since the verification information can be intercepted and re-used in subsequent false base station and false network attacks. This risk can be lessened by suitably encrypting the verification information.

The authentication challenge signal can include a digital signature of the verification information. Advantageously, the digital signature can be derived from a part of the output of a GSM A3/A8 algorithm which is not used for defining SRES or Kc. Using a part of the output of an existing algorithm can provide an efficient encryption solution which minimises the need for additional circuitry and signal exchanges between the components of the telecommunications system.

Embodiments of the invention will now be described by way of example with reference to the accompanying drawings, in which:

Figure 1 is a schematic diagram of a satellite telecommunications system together with a local, land-based mobile telecommunications system, in accordance with the invention;

Figure 2 is a more detailed block diagram of the satellite network in the vicinity of SAN 1 and a GSM based terrestrial cellular network shown as PLMN 9 in Figure 1;

Figure 3 is a schematic block diagram illustrating the arrangement of components within the satellite network;

Figure 4 is a schematic diagram of a mobile user terminal;

Figure 5 is a schematic block diagram of the circuits of the terminal shown in Figure 4;

Figure 6 is a schematic block diagram of the SIM card shown in Figures 4 and 5;

Figure 7 is a schematic diagram illustrating the data flows between the various components in a GSM network;

Figure 8 is a flow diagram of a conventional GSM authentication procedure;

Figure 9 is a flow diagram illustrating an example of an authentication procedure according to the invention;

Figure 10 is a schematic diagram showing the form of a flagged RAND (FRAND) used in the authentication procedure of Figure 9;

Figure 11 is a flow diagram illustrating another example of an authentication procedure according to the invention;

Figure 12 is a schematic diagram showing the form of an identified RAND (IRAND) used in the authentication procedure of Figure 11;

Figure 13 is a flow diagram illustrating a further example of an authentication procedure according to the invention;

Figure 14 is a schematic diagram showing the form of a signed RAND (SRAND) used in the authentication procedure of Figure 13;

Figure 15 is a schematic diagram showing the form of a flagged, signed RAND (FSRAND) used in the authentication procedure of Figure 16;

Figure 16 is a flow diagram illustrating an example of an authentication procedure according to the invention which combines the procedures illustrated in Figures 9 and 13;

Figure 17 is a schematic diagram showing the form of a flagged, identified RAND (FIRAND) used in the authentication procedure of Figure 16; and

Figure 18 is a schematic diagram illustrating the data flows between the various components in a GSM based satellite network.

## Satellite Network

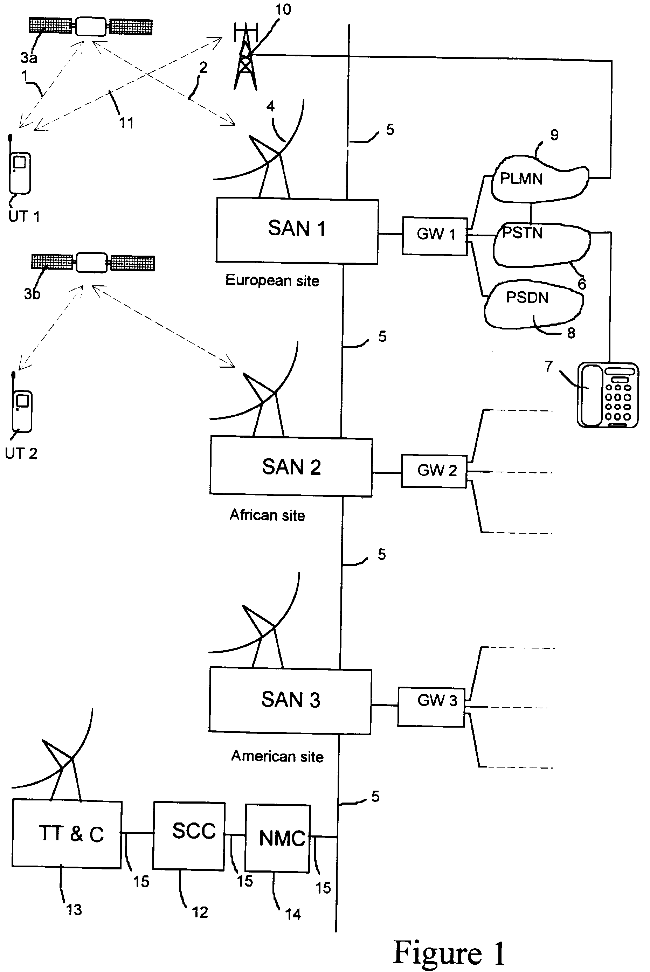

Referring to Figure 1, a schematic block diagram of a satellite mobile telecommunication network is shown corresponding generally to the ICO™ network. A mobile user terminal UT 1 in the form of a mobile telephone handset can communicate on a radio channel over a communication path 1, 2 via an earth orbiting satellite 3a with a land-based satellite access node SAN 1. As shown schematically in Figure 1, SAN 1 is provided with an antenna 4 which can track the orbiting satellite.

A number of the satellite access nodes SAN 1, 2, 3, etc are connected together to form a backbone network 5, which is connected though a number of gateways GW 1, 2, 3, etc to conventional land-based telephone networks. For example, considering the gateway GW 1, it is connected to a land-based public switched telephone network (PSTN) 6, which permits connection to be made to a conventional telephone set 7. The gateway GW 1 is additionally connected to a packet switched data network (PSDN) 8 and a public local mobile network (PLMN) 9. Each of the gateways GW 1, 2, 3 may comprise commercially available mobile switching centres of the type used in GSM networks. For a fuller understanding of GSM, reference is directed to the various GSM Specifications issued by the European Telecommunications Institute (ETSI). Reference is also directed to "The GSM System for Mobile Communications" by M. Mouly and M-B. Pautet, supra, for a more easily understandable synopsis.

As shown in Figure 1, the handset UT 1 can also communicate with the conventional land-based mobile network PLMN 9, which is shown schematically to include a transceiver station 10 that establishes a duplex link 11 with the user terminal UT 1.

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity. Further satellites may be included in the constellation in order to provide additional redundancy and diversity.

The satellites are typically arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN.

Typically, each SAN includes five antennas for tracking individual satellites of the constellation. The SANs are spaced around the earth in order to provide continuous coverage. In the example shown, SAN 1 may be located in Europe whereas SAN 2 may be located in Africa, SAN 3 in America and other SANs may be located elsewhere. In Figure 1, the SAN 2 is shown communicating with user terminal UT 2 via satellite 3b. For further details of the satellite network, reference is directed to GB-A-2 295 296.

The satellites 3a, 3b are in non-geostationary orbits and comprise generally conventional satellites such as the Hughes HS 601 and may include features disclosed in GB-A-2 288 913. Each satellite 3a, 3b is arranged to generate an array of beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network. The satellites are controlled by means of a satellite control centre (SCC) 12 and a tracking telemetry and control station (TT&C) 13, which are connected to a network management centre (NMC) 14 through a digital network 15 that is coupled to the backbone network 5. The SCC 12 and the TT&C 13 control operation of the satellites 3a, 3b, e.g. for setting the transmission power levels and transponder input tuning, as directed by the NMC 14. Telemetry signals for the satellites 3a, 3b are received by the TT&C 13 and processed by the SCC 12 to ensure that the satellites are functioning correctly.

During a telephone call, the handset UT 1, 2 communicates with the satellite 3a, 3b via a full duplex channel comprising a down link channel and an up link channel. The channels include TDMA time slots on frequencies allocated on initiation of the call and re-allocated during the call.

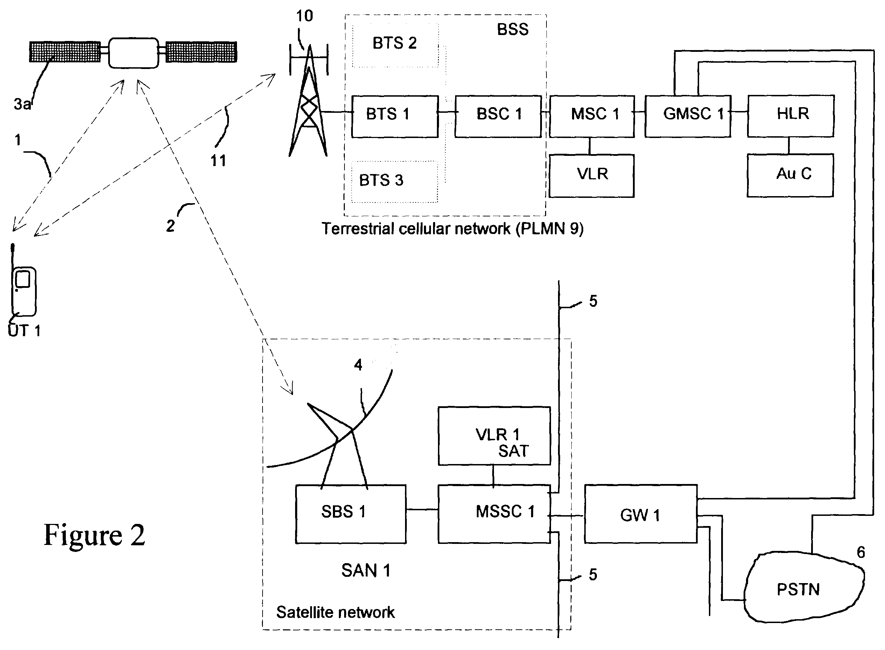

Referring to Figure 2, the configuration of SAN 1 and the local PLMN 9 is shown in more detail. SAN 1 consists of a satellite base station SBS 1 which is coupled to the five dish antennas 4 for tracking the satellites, the SBS 1 including transmitter and receiver circuits. A mobile satellite switching centre MSSC 1 is coupled to SBS 1 and to a satellite visitor location register VLR$_{SAT}$1. MSSC 1 couples communication signals (voice and packet data) to the backbone network 5 and to the SBS 1, so as to allow individual telephone calls to be established through the backbone network 5 and the duplex communication link 1, 2 via the satellite 3a, to the mobile terminal UT 1. The MSSC 1 responds to addresses on incoming communication signals from the antenna 4 to route the signals appropriately to their destinations.

The VLR$_{SAT}$1 maintains a record of each of the subscribers, namely the IMSIs of each of the user terminals UT that are making use of the SAN 1 for signal communication.

The MSSC 1 is connected to the gateway GW 1 so as to provide an output connection to PLMN 9, together with PSDN 8 and PSTN 6 shown in Figure 1. Thus, typically, packet data will be fed to and from the PSDN 8 and voice signals will be communicated to and from the network PLMN 9 or PSTN 6. It will be understood that all the SANs are of similar construction with a respective VLR$_{SAT}$ to maintain a record of the subscribers registered.

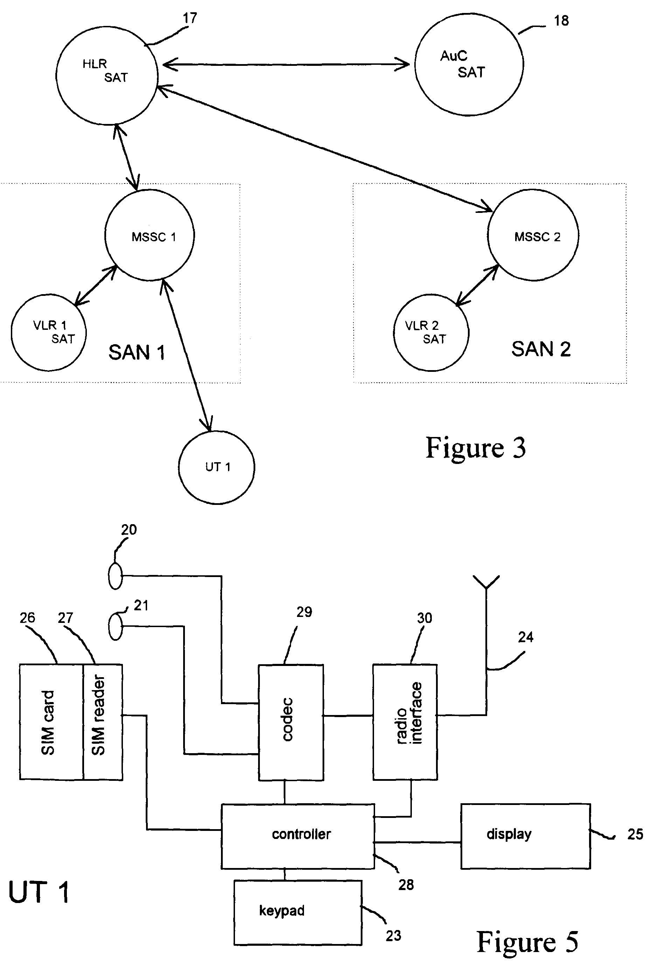

Referring to Figure 3, the satellite network also includes a database 17 referred to herein as the satellite home location register (HLR$_{SAT}$) that contains records relating to each mobile user terminal UT. The record includes the terminal's identity, namely, its IMSI, the geographical location of the UT, the home MSSC with which the UT is registered, so as to enable billing and other data to be collected at a single point, and the currently active SAN with which the UT is in communication via a satellite. The HLR$_{SAT}$ 17 may be located at the NMC 14 shown in Figure 1 or may be distributed among the SANs 1, 2, 3 etc. Associated with the HLR$_{SAT}$ 17 is an authentication centre AuC$_{SAT}$ 18 which stores the secret parameter Ki and the associated IMSI for each subscriber to the satellite network, in accordance with the GSM Specifications, to authenticate the subscriber for access to the satellite network.

**GSM Network (PLMN 9)**

Referring again to Figure 2, the GSM mobile network 9 includes a number of base transceiver stations BTS 1, 2, 3 etc which are geographically spaced apart to support a cellular network in a manner well known per se. Typically, the GSM network has a coverage area that overlies a country or state, and thus overlaps with the global coverage of the satellite network. BTS 1 is shown with an associated antenna 10, connected by a landline to a base switching centre BSC 1, it being understood that a plurality of BTSs are connected to BSC 1 in a manner well known per se, the BSC 1 and associated BTSs together forming a base station sub-system (BSS). The BSC 1 is connected to a mobile switching centre MSC 1 which can route calls within the mobile network and also through a gateway GMSC 1 to a conventional PSTN 6, or to the satellite network through the gateway GW 1. Thus, voice channel calls can be routed through the GSM network to and from UT 1.

A home location register HLR for the land-based GSM network 9 is provided coupled to the GMSC 1. The HLR, in a conventional manner, keeps a record of the IMSIs of the user terminals registered for use with the network and details of the subscribers associated with the IMSIs for billing purposes. The PLMN 9 may also include a visitor location register VLR which maintains a record of subscribers temporarily registered with the network, that have roamed from other GSM networks. For example, if the PLMN 9 is sited in the UK, subscribers from GSM networks in another country e.g. Germany may be locally registered on a temporary basis whilst in the UK. In a conventional manner, telephone usage information is relayed from the VLR though the PSTN 6 to the German network for billing purposes.

An authentication centre AuC is coupled to the HLR. The AuC includes a database of Ki's that are uniquely associated with the IMSIs of individual subscribers, together with an algorithm A3/A8 in accordance with the GSM Specifications, and a random number generator. This stored data is used to authenticate a user terminal, such as the terminal UT 1, as will be explained in more detail below.

**User terminal**

User terminals can include not only handheld or portable terminals, but also, for example, terminals to be mounted on marine vessels or aircraft or in terrestrial vehicles, or which may be partially or completely immobile. Such terminals can have widely differing characteristics, for example in terms of their maximum transmission power or the services they can support. It is important for the serving network to be aware of some of these characteristics when a connection is in place between it and the user terminal. Since the user terminal equipment can be changed by the user without warning the network operator, the necessary information must be communicated to the serving network at the start of every connection, for example when the user terminal is switched on. This information is stored in a user terminal classmark in accordance with the GSM Specifications, and includes information such as the maximum power the user terminal is able to transmit and the encryption algorithms which are implemented in the user terminal.

The current GSM Specifications support a total of seven encryption algorithms referred to as A5/x, where x = 1 to 7, although at present only A5/1 and A5/2 are fully specified.

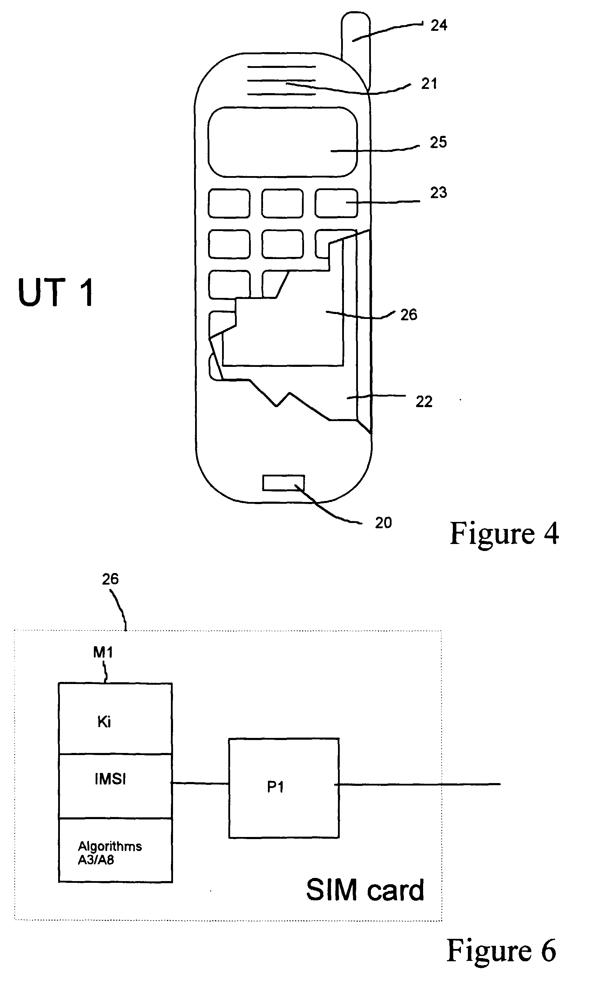

Referring to Figures 4 and 5, a mobile user terminal in the form of a mobile handset UT 1 is configured to operate with both the local terrestrial cellular network and the satellite network. Thus, in the example shown in Figure 2, the mobile handset UT 1 can operate either according to a land-based GSM protocol or according to the satellite network protocol. As shown in Figure 4, the user terminal UT 1 comprises a mobile handset which is capable of dual mode operation. It includes conventional GSM circuits for use with the land-based cellular network 9 together with similar circuitry for use with the satellite network. The handset comprises a microphone 20, a speaker 21, a battery 22, a keypad 23, an antenna 24 and a display 25 which can be used amongst other things, for displaying messages transmitted to the terminal over the digital packet data network, via the satellite link. The handheld unit UT 1 also includes a subscriber identification module (SIM) smartcard 26. The circuit configuration of the handset UT 1 is shown in block diagrammatic form in Figure 5. The SIM card 26 is received in an SIM card reader 27 coupled to a controller 28, typically a microprocessor based circuit. The microphone and speaker 20, 21 are coupled to a codec 29, coupled to a conventional radio interface 30 connected to the antenna 24 so as to transmit and receive communication signals, in a manner well known per se. For dual mode operation, the controller 28 can, for example via a key on the keypad 23, set the radio interface 30 and the codec 29 for use with either the satellite network or the land based GSM network. It can also select an alternate codec (not shown) for this purpose.

As shown in Figure 6, the SIM card 26 includes a memory M1 and a processor P1. The memory M1 stores an individual IMSI together with an identification function Ki which is unique to the SIM, together with an A3/A8 algorithm for authentication purposes.

**Authentication procedure**

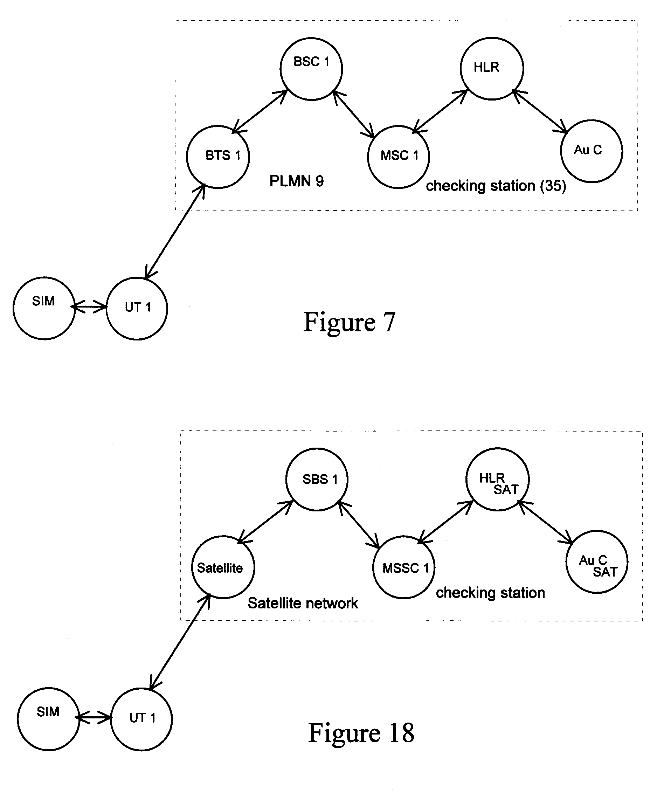

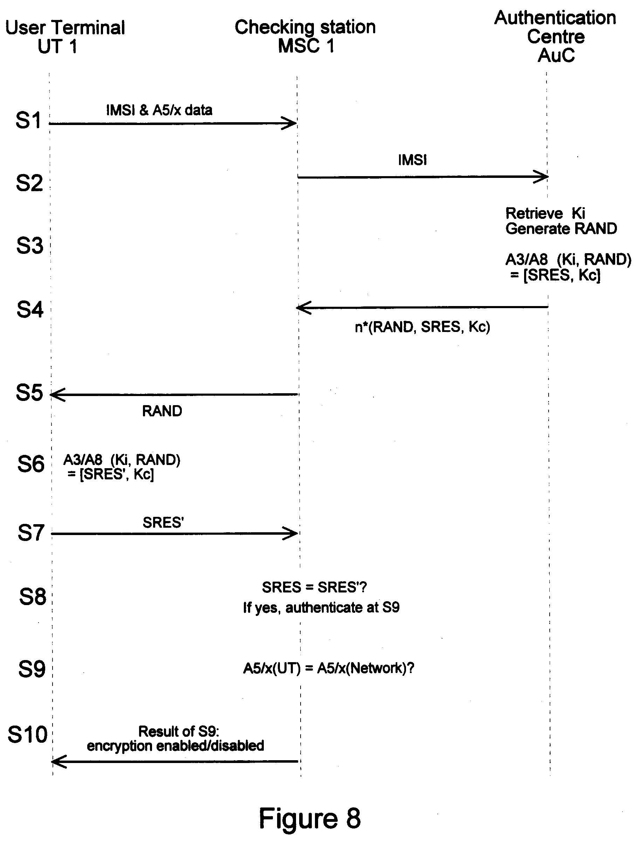

As previously mentioned, when the user terminal UT 1 is switched on, it needs to register with the networks that are to be used for communication purposes and an authentication procedure needs to be carried out in order to verify that the subscriber is authorised to access the network. The conventional GSM registration and authentication procedure is explained in more detail below with reference to Figures 7 and 8.

As previously mentioned, the user terminal UT 1 includes a SIM smartcard which stores a unique IMSI and a unique identification function Ki. The conventional registration and authentication procedure involves transmitting the IMSI to the GSM authentication centre AuC and comparing data from the SIM with data from the authentication centre AuC at a checking station 35. In the conventional GSM authentication procedure, the checking station 35 is located within the GSM network and may be located at MSC 1.

Figure 7 illustrates the data flow between the various components of the GSM network and the user terminal UT 1. The steps of the conventional authentication procedure are set out in Figure 8.

In a first step S1, the IMSI and classmark data identifying the encryption algorithms A5/x supported by the UT 1 are transmitted from UT 1 via BTS 1 and BSC 1 to MSC 1.

At step S2, MSC 1 transmits the IMSI to the HLR, where it is routed to the authentication centre AuC. As previously mentioned, the authentication centre AuC includes a copy of the identification function Ki associated with each respective IMSI which is valid for use on the GSM network.

At step S3, the IMSI is checked in the memory of the AuC, and a corresponding value of Ki is retrieved. Also, a 128 bit random number RAND is generated in the AuC using the random number generator (not shown). The random number RAND and the value of Ki are applied, in the AuC, as inputs to the GSM algorithm A3 to generate a 32 bit signed result SRES. The AuC also includes the GSM algorithm A8 which generates a secret key Kc that is used for encryption/decryption of data transmitted over the air between the user terminal and the land-based network. Kc is a maximum of 64 bits long, but may be less, in which case the most significant bits are complemented with zeroes. In practice, the algorithms A3/A8 are generally implemented by a single algorithm producing a 128 bit output, of which 32 bits constitute SRES and 64 bits constitute Kc, with the remaining 32 bits being unused.

At step S4, a triplet of signals comprising RAND, SRES and Kc is fed from the authentication centre AuC, through the HLR, to the MSC 1, which acts as checking station 35 in the authentication procedure. In practice, n triplets are supplied to the MSC 1 for use in subsequent authentications, for example during a call, but the processing of only one triplet will be considered herein in order to simplify the explanation.

At step S5, the individual value of RAND is transmitted on to the user terminal UT 1 through the network from the MSC 1. The SIM of the user terminal UT 1 stores the algorithm A3/A8 so that, at step S6, a value corresponding to SRES, referred to herein as SRES' is generated at the user terminal UT 1 from the received value of the random number RAND and the stored value of Ki in the SIM. This process also generates Kc for use in the encryption process described below.

At step S7, the value of SRES' is transmitted back though the network to the MSC 1 and compared at step S8 with the originally generated value of SRES. If they are the same, the user terminal UT 1 is authenticated, otherwise registration of the user terminal with the HLR is barred.

If the authentication is successful, then at step S9, the MSC 1 compares the classmark encryption algorithm information sent to it by UT 1 at step S1, concerning the encryption algorithms supported by the UT 1, with information about the encryption algorithms supported by the serving network of which the MSC 1 forms a part. If this comparison indicates that the UT 1 and the serving network support at least one algorithm common to both, for example A5/1, then at step S10, the MSC 1 informs the UT 1 that encrypted communications can proceed using that algorithm. The encryption and decryption may actually be carried out at the BSC 1 or BTS 1. Data is encrypted using the appropriate algorithm, for example, A5/1, which uses as its inputs the secret key Kc and the frame number of data transmitted through the network. Kc is generated at the user terminal UT 1 at step S6. For example, an A5/x algorithm take a 22-bit frame number and the 64-bit number Kc to produce two 114-bit ciphering sequences. Ciphering and deciphering are performed by applying an Exclusive-Or operation between a 114-bit radio burst and a 114-bit ciphering sequence. For further information on the encryption/decryption procedure, reference is directed to "The GSM System for Mobile Communications" by M. Mouly and M-B. Pautet, supra, pages 480 - 482.

In the event that there are no encryption algorithms common to the serving network and the user terminal UT 1, then at step S10, the MSC 1 informs the UT 1 that communications are to take place unencrypted. This information is displayed to the user as a warning. The user then has a choice as to whether to proceed with or to terminate the call.

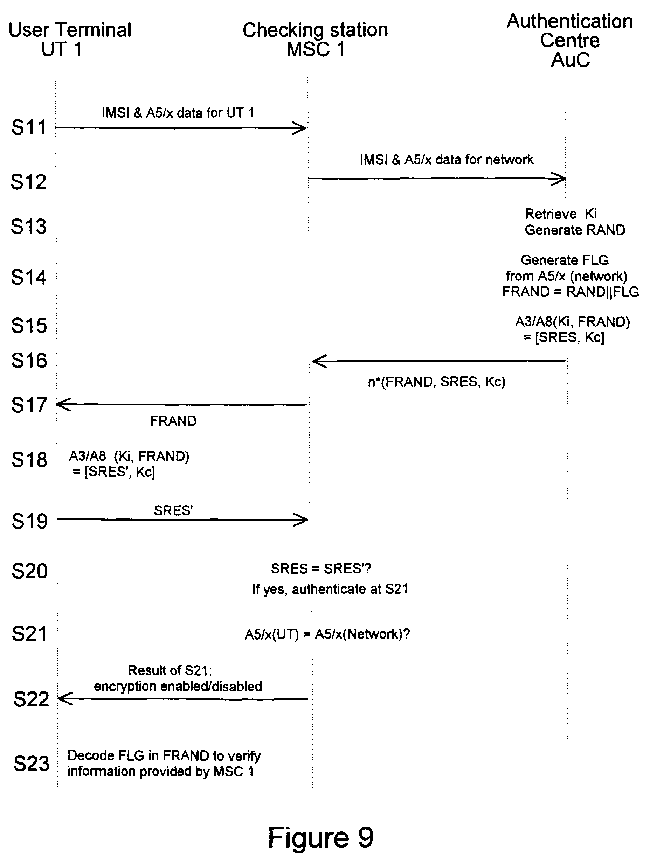

Figure 9 shows the steps in an authentication procedure according to the invention.

As in the conventional procedure, in the first step S11, the IMSI and classmark data identifying the encryption algorithms A5/x supported by the user terminal UT 1 are transmitted from UT 1 via BTS 1 and BSC 1 to MSC 1.

At step S12, the MSC 1 transmits the IMSI to the HLR together with information as to which encryption algorithms the serving network supports. The IMSI and the encryption algorithm information are both routed to the authentication centre AuC.

At step S13, the IMSI is checked in the memory of the AuC, and a corresponding value of Ki is retrieved. Also, a random number RAND is generated in the AuC using the random number generator (not shown).

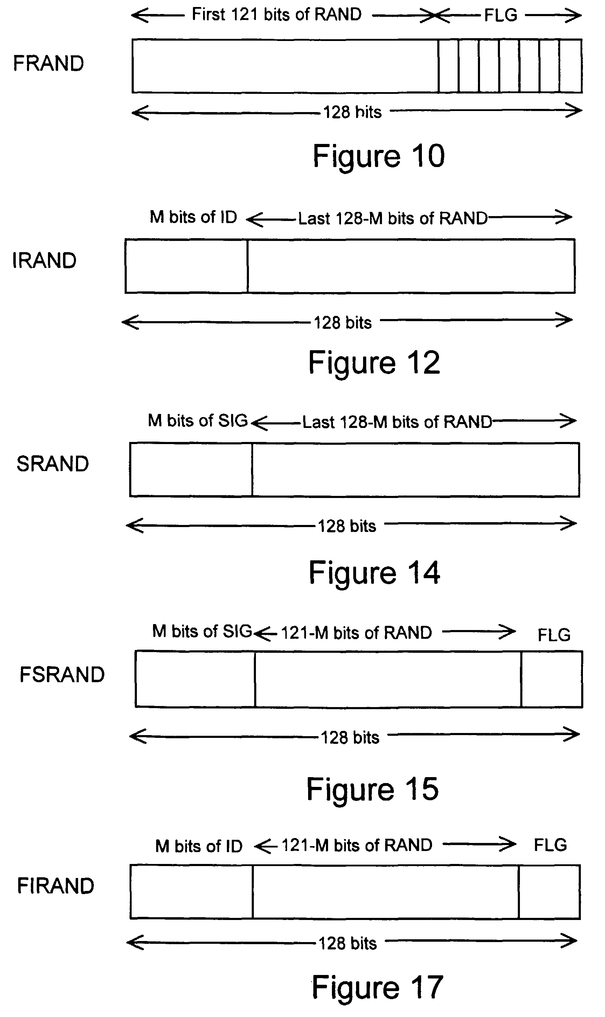

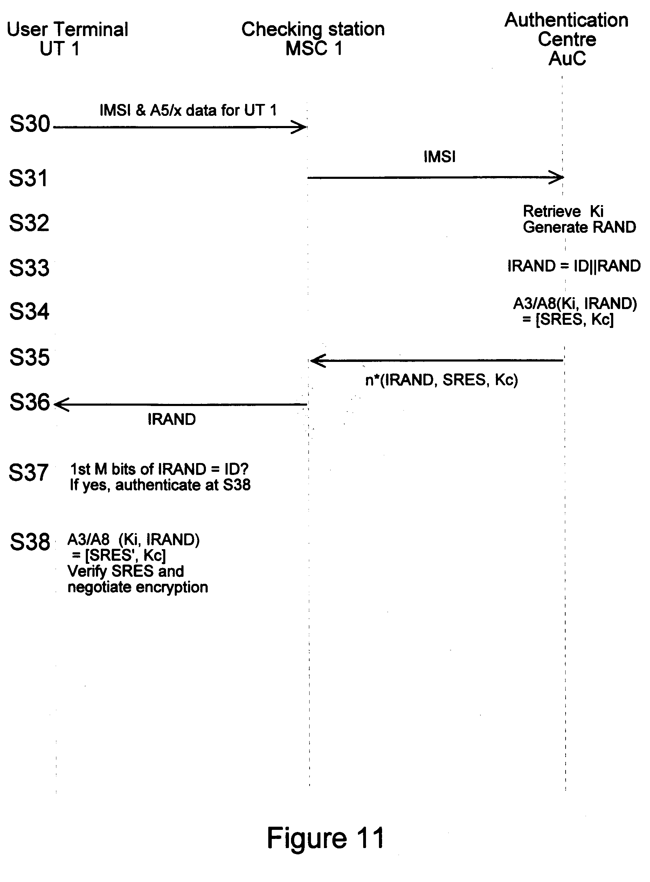

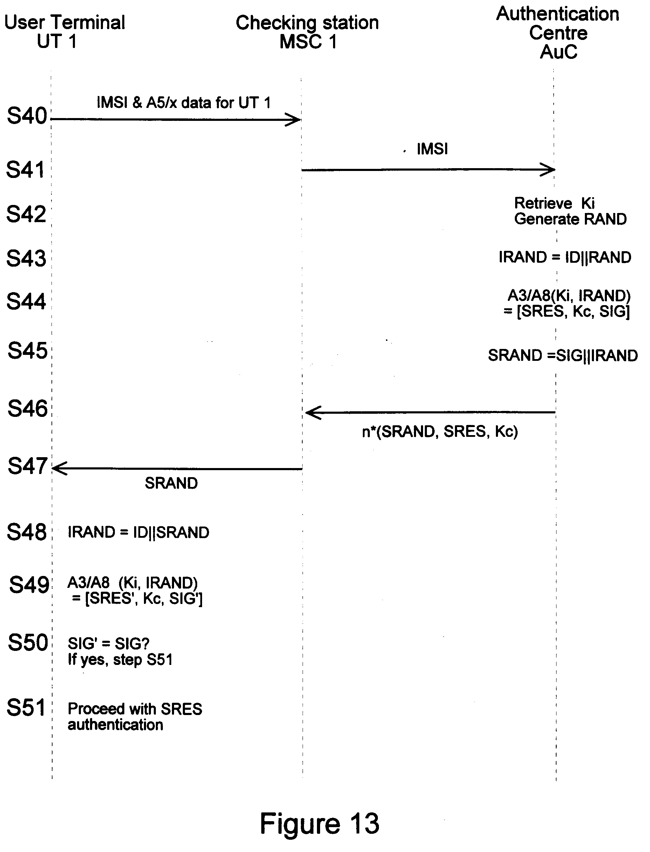

At step S14, the AuC records the encryption algorithm information into RAND, by inserting a flag bit sequence referred to herein as FLG into RAND, the resulting 128-bit sequence referred to herein as FRAND, representing 'Flagged RAND'. As mentioned previously, GSM supports up to seven encryption algorithms, so that a 7-bit flag FLG could be incorporated into RAND to indicate the supported algorithms. For example, a network supporting A5/2 alone could have flag 0000010, whereas 0000011 would indicate that both A5/1 and A5/2 are supported. The flag FLG could be incorporated into RAND by, for example, overwriting the seven least significant bits of RAND with the flag bit sequence, as indicated in Figure 9 using the notation RAND | | FLG. The resulting bit pattern of FRAND is shown schematically in Figure 10.

At step S15, FRAND and the value of Ki are applied, in the AuC, as inputs to a combined GSM algorithm A3/A8 used, as in the conventional GSM procedure, to generate a signed result SRES and the secret key Kc.

At step S16, a triplet of signals comprising FRAND, SRES and Kc is fed from the authentication centre AuC, through the HLR to the MSC 1, which acts as checking station 35 in the authentication procedure. In practice, n triplets are supplied to the MSC 1 for use in subsequent authentications, for example during a call, but the processing of only one triplet will be considered herein in order to simplify the explanation.

At step S17, the individual value of FRAND is transmitted on to the user terminal UT 1 through the network from the MSC 1. The SIM of the user terminal UT 1 stores the algorithm A3/A8 so that, at step S18, a corresponding value SRES' is generated at the user terminal UT 1 from the received value of the random number FRAND and the stored value of Ki in the SIM. This process also generates Kc for use in the encryption process described below.

At step S19, the value of SRES' is transmitted back through the network to the MSC 1 and compared at step S20 with the originally generated value of SRES. If they are the same, the user terminal is authenticated but otherwise registration of the user terminal with the HLR is barred.

If the authentication is successful, then at step S21, the MSC 1 compares the classmark information sent to it by UT 1 at step S11 regarding the encryption algorithms supported by the UT 1, with information about the encryption algorithms supported by the serving network of which the MSC 1 forms a part. If this comparison indicates that the user terminal UT 1 and the serving network support at least one algorithm common to both, for example A5/1, then at step S22 the MSC 1 informs the UT 1 that encrypted communications can proceed using that algorithm. The encryption and decryption may actually be carried out at the BSC 1 or BTS 1. Data is encrypted using the appropriate algorithm, for example, A5/1, which uses as its inputs the secret key Kc and the frame number of data transmitted through the network. Kc is generated at the user terminal UT 1 at step S18. Data encryption is as described above at Figure 8 in relation to the conventional GSM procedure.

In the event that at step S21 the MSC 1 determines that there are no encryption algorithms common to both the serving network and the UT 1, then at step S22, it informs the user terminal UT 1 to this effect. However, the user terminal UT 1 can determine from the received FRAND whether it shares an encryption algorithm with the serving network. It can therefore verify the information provided by the MSC 1 by decoding, at step S23, the flag information FLG in FRAND and comparing it with the algorithms which it supports. For example, the user terminal UT 1 can read the 7 least significant bits of FRAND and assuming a bit pattern of 0000010, determine that the serving network supports encryption algorithm A5/2 only, or if the bit pattern is 0000011, that both A5/1 and A5/2 are supported. If this comparison confirms the information supplied by the MSC 1, then communications have to take place unencrypted. The user then has a choice as to whether to proceed with or to terminate the call.

However, if the flag comparison indicates that the user terminal UT 1 appears to share an algorithm with the serving network, but has been informed by the MSC 1 that it does not share any algorithms, then the user terminal UT 1 can terminate the call on the assumption that a rogue base station or unauthorised network has become involved in the communications loop.

The example described above has some built in security against unauthorised changes to the flag FLG. If a rogue base-station were to modify the flag FLG in FRAND, the SIM would produce an invalid SRES', in which case service would be denied by the serving network.

In a modified example of the above, the user terminal UT 1 could be configured always to check the information provided by the MSC 1, even when the negotiation procedure determines that there is an encryption algorithm common to both the user terminal UT 1 and the serving network. This can enable the user terminal UT 1 to determine that there are other common algorithms which could be used for the encryption procedure.

A further example of the invention is now described with reference to Figure 11.

In a first step S30, the IMSI and classmark data identifying the encryption algorithms A5/x supported by the UT 1 are transmitted from UT 1 via BTS 1 and BSC 1 to MSC 1.

At step S31, MSC 1 transmits the IMSI to the HLR, where it is routed to the authentication centre AuC.

At step S32, the IMSI is checked in the memory of the AuC, and a corresponding value of Ki is retrieved. A random number RAND is again generated in the AuC using the random number generator (not shown).

At step S33, the AuC forces the first M bits of RAND, for example 20 bits, to an identifying bit pattern ID, which is also known to the SIM, so producing a 128 bit quantity referred to herein as IRAND, representing 'Identified RAND'. The bit pattern ID could be incorporated into RAND by, for example, overwriting the 20 most significant bits of RAND with the ID bit sequence, as indicated in Figure 11 using the notation ID || RAND. The resulting bit pattern of IRAND is shown schematically in Figure 12. The number M can be specified by the network operator.

At step S34, IRAND and the value of Ki are applied, in the AuC, as inputs to the combined GSM algorithm A3/A8 to generate a signed result SRES and the secret key Kc.

At step S35, a triplet of signals comprising IRAND, SRES and Kc is fed from the authentication centre AuC, through the HLR to the MSC 1, which acts as checking station 35 in the authentication procedure. In practice, n triplets are supplied to the MSC 1 for use in subsequent authentications, for example during a call, but the processing of only one triplet will be considered herein in order to simplify the explanation.

At step S36, the individual value of IRAND is transmitted on to the user terminal UT 1 through the network from the MSC 1.

At step S37, the SIM in the user terminal UT 1 compares the first M bits of the received value IRAND with the first M bits of the identifier bit pattern ID which is known only to it and the serving network. If there is a mismatch, then the SIM concludes that the IRAND did not originate at the AuC for the network and it can therefore terminate the call.

If the first M bits of IRAND match the first M bits of ID, then the SIM concludes that IRAND originated at the AuC for the network and therefore proceeds with the authentication of the user terminal UT 1 at step S38.

At step S38, a corresponding value SRES' is generated at the user terminal UT 1 from the received value of the random number IRAND and the stored value of Ki in the SIM. This process also generates Kc. The remaining steps in the authentication procedure are the same as described in steps S7 to S10 of the conventional authentication procedure described above in relation to Figure 8.

Of course, the transmission of ID as part of IRAND leads to the possibility of interception or that an attack based on random generation of the low number of bits making up ID, will succeed. A number of strategies exist to prevent this, for example, by varying ID on each transmission according to a look up table known only to the AuC and the SIM. Alternatively, ID can be protected, for example, by encryption, so that it is never directly transmitted in the clear, as described in the following example.

Referring to Figure 13, at steps s40 and S41, the IMSI and data identifying the encryption algorithms A5/x supported by the UT 1 are transmitted from UT 1 via BTS 1 and BSC 1 to MSC 1, from where the IMSI is transmitted to the AuC.

At step S42, the IMSI is checked in the memory of the AuC, and a corresponding value of Ki is retrieved. A random number RAND is again generated in the AuC using the random number generator (not shown).

At step S43, the AuC forces the first M bits of RAND, for example 20 bits, to the bit pattern ID which is also known to the SIM to produce IRAND, again as shown in Figure 12. The number M may be specified by the network operator.

At step S44, IRAND and the value of Ki are applied, in the AuC, as inputs to the combined GSM algorithm A3/A8 to generate a signed result SRES and the secret key Kc, together with a further 32 bit number which is unused in the conventional GSM authentication procedure, but which is referred to herein as SIG. Since SIG is produced by algorithmic combination of Ki and IRAND, it is a digital signature for IRAND which can only be correctly generated by the AuC and the SIM in the user terminal UT 1.

At step S45, the first M bits of IRAND are replaced by the first M bits of SIG to produce a value referred to herein as SRAND, representing 'Signed RAND', as shown in Figure 14.

At step S46, a triplet of signals comprising SRAND, SRES and Kc is fed from the authentication centre AuC, through the HLR to the MSC, which acts as checking station 35 in the authentication procedure. In practice, n triplets are supplied to the MSC for use in subsequent authentications, for example during a call, but the processing of only one triplet will be considered herein in order to simplify the explanation.

At step S47, the individual value of SRAND is transmitted on to the user terminal UT 1 through the network from the MSC 1.

At step S48, the SIM of the user terminal UT 1 replaces the first M bits of SRAND with the first M bits of the bit pattern ID, to regenerate IRAND.

At step S49, a value corresponding to SIG, referred to herein as SIG', is generated by applying the A3/A8 algorithm stored at the SIM to IRAND. At step S50, the first M bits of SIG' are compared with the M bits of SIG received as part of SRAND. If the values do not agree, then IRAND is not correctly signed, so that the SIM can choose to discontinue the request for service on the assumption that an unauthorised network is involved in the communications loop.

If the values do agree, then the SIM concludes that SRAND originated at the AuC for the network and at step S51 proceeds with the authentication of the UT 1 by transmitting SRES' generated at step S49, to the MSC 1, as described in relation to step S7 to S10 in Figure 8.

The procedure described above implements an authentication scheme without significant new computation, since the majority of GSM operators implement the A3/A8 algorithm to produce a total of 128 bits, including 32 bits for SRES, 64 bits for Kc and an unused 32 bit sequence, which can be used as a channel to digitally sign an authentication challenge such as RAND. Where the unused bit sequence is not produced, for example, where the A3/A8 algorithm is implemented to produce only a 96 bit sequence comprising SRES and Kc, a digital signature for RAND can still be implemented using independent digital signature algorithms, for example algorithms such as the RSA public key encryption algorithm. However, to avoid the need to compute a separate digital signature in this case, SRES can be used as the source of the digital signature, since it is directly analogous to SIG. For example, referring to Figure 13, at step S45, SRAND can be produced by the operation SRAND = SRES || IRAND , using the first M bits of SRES. However, the use of SIG is preferred to that of SRES is at all possible, since this assists in ensuring the security of SRES cannot be compromised. As a further alternative to the use of SRES, Kc could also be used as the source of the digital signature.

The authentication procedures illustrated in the examples above can easily be combined for additional security, by producing a digital signature for FRAND. In this case, the user terminal UT 1 can be sure not only that FRAND has been produced by the AuC, but also that it has not been tampered with. In this case the form of the combined signal FSRAND, representing flagged, signed RAND is shown in Figure 15.

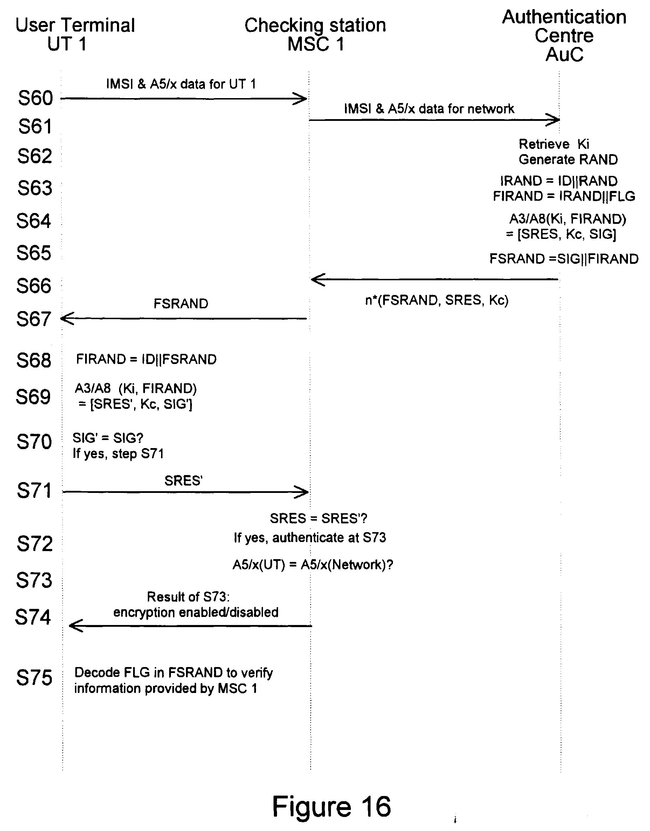

Referring to Figure 16, which illustrates the operation of the combined authentication procedure, in the first step S60, the IMSI and data identifying the encryption algorithms A5/x supported by the UT 1 are transmitted from UT 1 via BTS 1 and BSC 1 to MSC 1.

At step S61, the MSC 1 transmits the IMSI to the HLR together with information as to which encryption algorithms the serving network supports. The IMSI and the encryption algorithm information are both routed to the authentication centre AuC.

At step S62, the IMSI is checked in the memory of the AuC, and a corresponding value of Ki is retrieved. Also, a random number RAND is generated in the AuC using the random number generator (not shown). At step S63, the AuC generates IRAND as described in relation to Figure 13. It then records the encryption algorithm information into IRAND, by inserting a flag bit sequence FLG into IRAND, as described above in relation to Figure 9, to generate a new sequence referred to herein as FIRAND, shown in Figure 17.

At step S64, FIRAND and the value of Ki are applied, in the AuC, as inputs to the combined GSM algorithm A3/A8 to generate a signed result SRES and the secret key Kc, together with the 32 bit number SIG which is unused in the conventional GSM authentication procedure.

At step S65, FSRAND is generated by applying the first M bits of SIG to FIRAND. The resulting form of FSRAND is shown in Figure 15.

At step S66, a triplet comprising FSRAND, SRES and Kc is transmitted to MSC 1, and at step S67, FSRAND is transmitted on to the user terminal UT 1.

At step S68, the user terminal UT 1 replaces the first M bits of FSRAND with the first M bits of ID to regenerate FIRAND. At step 69, SIG' is generated by applying the SIMs locally stored A3/A8 algorithm to FIRAND. At step S70, SIG' is compared with SIG to verify FIRAND. If FIRAND is verified, then at step S71, the value of SRES' generated at step S69 is transmitted to MSC 1.

Steps S72 to S75 are analogous to steps S20 to S23 described in relation to Figure 9 above. By verifying both that the authentication challenge came from an authorised authentication station, and that the information regarding supported encryption algorithms provided by the MSC 1 is correct, a more secure authentication procedure is provided.

### Authentication for satellite service provision

The procedure for satellite service authentication is very similar to that described above, the differences lying primarily in the location of the authentication centre and checking station.

Figure 18 illustrates the data flow between the various components of the ICO™ satellite network and the user terminal UT 1. Messages pass from the user terminal UT 1 to a satellite 3a and then via the base station SBS 1 to the authentication centre $AuC_{SAT}$ associated with the satellite network, via MSSC 1, which acts as the checking station in the satellite network, and $HLR_{SAT}$. Messages from the authentication centre $AuC_{SAT}$ to the UT 1 pass via the $HLR_{SAT}$, MSSC 1, SBS 1 and satellite 3a to the user terminal. Therefore $AuC_{SAT}$ in the satellite network corresponds to AuC in the GSM land based network and MSSC 1 in the satellite network corresponds to MSC 1 in the GSM network. The authentication procedure described above in relation to Figures 8 to 17 is therefore equally applicable to the ICO™ satellite network.

While the invention has been described primarily by reference to the GSM authentication procedure, its principles are applicable to any telecommunications protocol authentication procedure which is analogous to, or a modified version of, GSM, or which works in a similar way, for example, by transmitting random authentication challenges to a user terminal.

### Claims

1. A method of authenticating a connection between a user terminal and a network offering a communications service to the user terminal in a mobile telecommunications system, in which an authorised authentication station issues an authentication challenge to the user terminal, comprising the step of including in the authentication challenge verification information concerning the encryption algorithms which are supported by the network.

2. A method according to claim 1, comprising the further step of including authentication information in the challenge for verifying the authenticity of the encryption algorithm information.

3. A method according to claim 2, wherein the authentication information comprises a digital signature (SIG) of the encryption algorithm information.

4. A method according to claim 2 or 3, wherein the authentication information comprises a digital signature (SIG) of the authentication challenge.

5. A method according to claim 3 or 4, wherein the mobile telecommunications system operates according to the GSM standard, comprising deriving the digital signature SIG from a part of the output of a GSM A3/A8 algorithm which is not used for defining SRES or Kc.

**6.** A method according to any one of the preceding claims, including verifying information received at the user terminal concerning the encryption algorithms supported by the network using the verification information in the authentication challenge.

**7.** A method of authenticating a connection between a user terminal and a network offering a communications service to the user terminal in a mobile telecommunications system, in which an authorised authentication station issues an authentication challenge to the user terminal, comprising the step of including verification information in the authentication challenge to indicate to the user terminal that the challenge originates from the authorised station.

**8.** A method according to claim 7, wherein the verification information comprises an authentication centre identifier code (ID).

**9.** A method according to claim 7, wherein the verification information comprises a digital signature (SIG) of an authentication centre identifier code (ID).

**10.** A method according to claim 8 or 9, wherein the authentication information comprises a digital signature (SIG) of the authentication challenge.

**11.** A method according to claim 9 or 10, wherein the mobile telecommunications system operates according to the GSM standard, comprising deriving the digital signature SIG from a part of the output of a GSM A3/A8 algorithm which is not used for defining SRES or Kc.

**12.** A method according to any one of claims 7 to 11, including using the verification information at the user terminal to verify that the authentication challenge originated at an authorised authentication station.

**13.** A method according to any one of claims 7 to 12, further comprising the step of including in the authentication challenge verification information concerning the encryption algorithms which are supported by the network.

**14.** A user terminal for use in a mobile telecommunications system to establish a connection with a network, comprising a receiver to receive an authentication challenge, and means for verifying from information in the challenge, that the challenge originates from an authorised authentication centre.

**15.** A user terminal for use in a mobile telecommunications system to establish a connection with a network, comprising a receiver to receive an authentication challenge which includes information defining the encryption algorithms supported by the network, and means for authenticating the connection in dependence on a comparison between said information and information relating to the encryption algorithms supported by the user terminal.

**16.** A user terminal according to claim 15, further comprising means for verifying from information in the authentication challenge, that the challenge originates from an authorised authentication centre.

**17.** An authentication station for authenticating a connection between a user terminal and a network offering a communications service to the user terminal in a mobile telecommunications system, in which the authentication station issues an authentication challenge to the user terminal, comprising means configured to include in the authentication challenge verification information concerning the encryption algorithms which are supported by the network.

**18.** An authentication station for authenticating a connection between a user terminal and a network offering a communications service to the user terminal in a mobile telecommunications system, in which the authentication station issues an authentication challenge to the user terminal, comprising means configured to include verification information in the authentication challenge to indicate to the user terminal that the challenge originates from the authorised station.

**19.** An authentication station according to claim 17 or 18, further comprising means for digitally signing said verification information.

**20.** An authentication station according to claim 19, wherein said mobile telecommunications system is a GSM system and said digital signing means include means for deriving the digital signature from a part of the output of a GSM A3/A8 algorithm which is not used for defining SRES or Kc.

**21.** A method of authenticating a user terminal to avoid a false base station or false network attack, comprising:

receiving an authentication challenge containing verification information concerning the encryption algorithms supported by a network offering a communications service to the user terminal;
performing an encryption algorithm negotiation procedure; and

verifying the result of the negotiation procedure based on the verification information.

22. A method of authenticating a user terminal to avoid a false base station or false network attack, comprising:

receiving an authentication challenge containing verification information concerning the origin of the challenge; and
determining at the user terminal whether the challenge origin is an authorised authentication centre.

23. A method according to claim 22, comprising comparing the verification information with information stored at the user terminal to determine whether the challenge origin is an authorised authentication centre.

24. An authentication challenge signal for use in authenticating a connection between a user terminal and a network offering a communications service to the user terminal in a mobile telecommunications system, the signal comprising verification information for use by the user terminal to verify the encryption algorithms which are supported by the network.

25. An authentication challenge signal for use in authenticating a connection between a user terminal and a network offering a communications service to the user terminal in a mobile telecommunications system, the signal comprising verification information for use by the user terminal to verify the authenticity of the station at which the signal originates.

26. An authentication challenge signal according to claim 25, further comprising verification information for use by the user terminal to verify the encryption algorithms which are supported by the network.

27. An authentication challenge signal according to any one of claims 24 to 26, including a digital signature of the verification information.

28. An authentication challenge signal according to claim 27, wherein said digital signature is derived from a part of the output of a GSM A3/A8 algorithm which is not used for defining SRES or Kc.

Figure 1

HLR

Au C

GMSC 1

MSC 1

VLR

BSC 1

BSS

BTS 2

BTS 1

BTS 3

Terrestrial cellular network (PLMN 9)

10

11

3a

1

2

UT 1

PSTN

6

GW 1

5

5

VLR 1
SAT

MSSC 1

SBS 1

SAN 1

Satellite network

4

## Figure 2

Figure 3

UT 1

Figure 5

UT 1

Figure 4

SIM card

Figure 6

Figure 7

Figure 18

Figure 8

User Terminal
UT 1

Checking station
MSC 1

Authentication
Centre
AuC

S11 — IMSI & A5/x data for UT 1 →

S12 — IMSI & A5/x data for network →

S13 — Retrieve Ki
Generate RAND

S14 — Generate FLG
from A5/x (network)
FRAND = RAND||FLG

S15 — A3/A8(Ki, FRAND)
= [SRES, Kc]

S16 ← n*(FRAND, SRES, Kc)

S17 ← FRAND

S18 — A3/A8 (Ki, FRAND)
= [SRES', Kc]

S19 — SRES' →

S20 — SRES = SRES'?
If yes, authenticate at S21

S21 — A5/x(UT) = A5/x(Network)?

S22 ← Result of S21:
encryption enabled/disabled

S23 — Decode FLG in FRAND to verify
information provided by MSC 1

## Figure 9

FRAND

← First 121 bits of RAND →|← FLG →

←——————— 128 bits ———————→

## Figure 10

IRAND

M bits of ID ←—Last 128-M bits of RAND——→

←——————— 128 bits ———————→

## Figure 12

SRAND

M bits of SIG ←—Last 128-M bits of RAND——→

←——————— 128 bits ———————→

## Figure 14

FSRAND

M bits of SIG ←—121-M bits of RAND——→ FLG

←——————— 128 bits ———————→

## Figure 15

FIRAND

M bits of ID ←—121-M bits of RAND——→ FLG

←——————— 128 bits ———————→

## Figure 17

User Terminal
UT 1

Checking station
MSC 1

Authentication
Centre
AuC

S30 ——— IMSI & A5/x data for UT 1 ———→

S31 ——————— IMSI ———————→

S32             Retrieve Ki
            Generate RAND

S33           IRAND = ID||RAND

S34           A3/A8(Ki, IRAND)
            = [SRES, Kc]

S35 ←———————————————
        n*(IRAND, SRES, Kc)

S36 ←——————————
     IRAND

S37    1st M bits of IRAND = ID?
      If yes, authenticate at S38

S38    A3/A8 (Ki, IRAND)
      = [SRES', Kc]
      Verify SRES and
      negotiate encryption

# Figure 11

Figure 13

| User Terminal UT 1 | Checking station MSC 1 | Authentication Centre AuC |
|---|---|---|

S60 — IMSI & A5/x data for UT 1 →

S61 — IMSI & A5/x data for network →

S62 — Retrieve Ki
Generate RAND

S63 — IRAND = ID||RAND
FIRAND = IRAND||FLG

S64 — A3/A8(Ki, FIRAND)
= [SRES, Kc, SIG]

S65 — FSRAND =SIG||FIRAND

S66 ← n*(FSRAND, SRES, Kc)

S67 ← FSRAND

S68 — FIRAND = ID||FSRAND

S69 — A3/A8 (Ki, FIRAND)
= [SRES', Kc, SIG']

S70 — SIG' = SIG?
If yes, step S71

S71 — SRES' →

S72 — SRES = SRES'?
If yes, authenticate at S73

S73 — A5/x(UT) = A5/x(Network)?

S74 ← Result of S73:
encryption enabled/disabled

S75 — Decode FLG in FSRAND to verify
information provided by MSC 1

# Figure 16

European Patent
Office

**EUROPEAN SEARCH REPORT**

Application Number

EP 98 30 9658

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 091 942 A (DENT PAUL) 25 February 1992 <br><br> * column 21, line 43 - column 22, line 3 * | 7,12,14, 18,22, 23,25 | H04Q7/38 |
| X | US 5 544 245 A (TSUBAKIYAMA HIDEKI) 6 August 1996 <br><br> * column 2, line 50 - column 3, line 44 * <br> * column 4, line 19 - column 5, line 16 * | 7,12,14, 18,22, 23,25 | |
| X | US 5 371 794 A (DIFFIE WHITFIELD ET AL) 6 December 1994 <br><br> * column 6, line 67 - column 8, line 58 * | 7,12,14, 18,22, 23,25 | |
| D,A | MOULY M ET AL: "GSM SYSTEM FOR MOBILE COMMUNICATIONS, PASSAGE" August 1993 , THE GSM SYSTEM FOR MOBILE COMMUNICATIONS, PAGES 477-487 , MOULY M; PAUTET M-B XP002100656 <br> * page 478, line 13 - page 480, line 23 * | 1,7,14, 15,17, 18,21, 22,24,25 | TECHNICAL FIELDS SEARCHED (Int.Cl.6) <br><br> H04Q |
| A | PATEL S: "WEAKNESS OF NORTH AMERICAN WIRELESS AUTHENTICATION PROTOCOL" IEEE PERSONAL COMMUNICATIONS, vol. 4, no. 3, June 1997, pages 40-44, XP000655315 | | |

The present search report has been drawn up for all claims

| Place of search | Date of completion of the search | Examiner |
|---|---|---|
| THE HAGUE | 21 April 1999 | Baas, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 98 30 9658

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-1999

| Patent document cited in search report | | Publication date | Patent family member(s) | | Publication date |
|---|---|---|---|---|---|
| US 5091942 | A | 25-02-1992 | AU | 645228 B | 06-01-1994 |
| | | | AU | 8442991 A | 18-02-1992 |
| | | | CA | 2087722 A,C | 24-01-1992 |
| | | | CN | 1059058 A,B | 26-02-1992 |
| | | | GB | 2261579 A,B | 19-05-1993 |
| | | | HK | 30295 A | 17-03-1995 |
| | | | JP | 2656153 B | 24-09-1997 |
| | | | JP | 6500900 T | 27-01-1994 |
| | | | KR | 9607808 B | 12-06-1996 |
| | | | NZ | 238653 A | 25-03-1994 |
| | | | WO | 9202087 A | 06-02-1992 |
| US 5544245 | A | 06-08-1996 | JP | 6350598 A | 22-12-1994 |
| | | | GB | 2279540 A,B | 04-01-1995 |
| US 5371794 | A | 06-12-1994 | EP | 0651533 A | 03-05-1995 |
| | | | JP | 7193569 A | 28-07-1995 |

EPO FORM P0459

For more details about this annex : see Official Journal of the European Patent Office, No. 12/82